# EUROPÄISCHE PATENTSCHRIFT

(11) **EP 3 737 904 B1**
(45) Veröffentlichungstag und Bekanntmachung des Hinweises auf die Patenterteilung: **02.03.2022**
(21) Anmeldenummer: 19701053.1
(22) Anmeldetag: 11.01.2019
(51) Int. Cl.: F28F 9/00, F28F 19/00, F28D 7/16, C01B 17/69

(54) **ROHRBÜNDELWÄRMEÜBERTRAGER MIT KORROSIONSSCHUTZ**
TUBULAR HEAT EXCHANGER HAVING CORROSION PROTECTION
ÉCHANGEUR DE CHALEUR À FAISCEAU TUBULAIRE PRÉSENTANT UNE PROTECTION ANTICORROSION

(30) Priorität: 12.01.2018 DE 202018100156 U
(43) Veröffentlichungstag der Anmeldung: 18.11.2020
(73) Patentinhaber: Hugo Petersen GmbH, 65203 Wiesbaden (DE)
(72) Erfinder: FANI YAZDI, Sayyed Ahmad, 65189 Wiesbaden (DE); SCHULZE, Axel, 65510 Idstein/Heftrich (DE)
(74) Vertreter: Tesch, Sabine
(86) Internationale Anmeldenummer: PCT/EP2019/050678
(87) Internationale Veröffentlichungsnummer: WO 2019/138065

(56) Entgegenhaltungen:
- WO-A1-2012/171824
- DE-A1-102011 109 970
- US-A- 2 494 767
- US-A- 2 995 341
- US-A- 3 182 719

## Beschreibung

Die Erfindung betrifft einen Rohrbündelwärmeübertrager mit Korrosionsschutz gemäß Anspruch 1. Ein Rohrbündelwärmeüberträger gemäss dem Oberbegriff des Patentanspruchs 1 ist zum Beispiel aus der US 3 182 719 A oder aus der US 2 995 314 A bekannt. Rohrbündelwärmeübertrager werden auch als Rohrbündelwärmetauscher bezeichnet und sind die in der Industrie am Häufigsten eingesetzten Wärmetauscher. Bei den Rohrbündelwärmetauschern trennt die Wärmeübertragungsfläche einen heißen von einem kalten Fluidraum. Ein Fluid fließt durch die Rohre (rohrseitig), während das andere Fluid um die Rohre strömt (mantelseitig). Rohrbündel werden im Mantel platziert und dabei so in einem Rohrboden gehalten, dass dieser eine Barriere bildet, um die Vermischung der beiden unterschiedlich temperierten Fluide zu vermeiden. Um eine höhere Geschwindigkeit im Mantel zu erzeugen bzw. die Kontakthäufigkeit des Mediums im Mantelraum mit der Wärmeübertragungsfläche zu erhöhen, können Umlenksegmente eingesetzt werden. Das Fluid im Mantel hat dann eine längere Strecke zwischen Ein- und Ausgangsstutzen zu passieren.

Mit einem radial durchströmten Rohrbündelwärmeübertrager wird eine gleichmäßige Strömung vom Zentralkanal nach außen in radialer Richtung beziehungsweise vom Raum zwischen dem Mantel des Wärmetauschers um die Rohrbündel herum zum Zentralkanal erreicht. Dadurch werden sowohl geringere mechanische Belastungen als auch kleinere Druckverluste im Mantelraum des Wärmetauschers im Vergleich zum klassischen Rohrbündelwärmeübetrager wie einem Kreuzströmungswärmetauscher ermöglicht. Damit gewinnt man nicht nur Freiheit in der Wahl der mantelseitigen Ausrichtung der Zu- und Abführstutzen, sondern auch eine kompaktere Bauweise des Rohrbündels.

Derartige Rohrbündelwärmeübertrager haben ein sehr breites Anwendungsspektrum und werden auch bei der Schwefelsäuresynthese eingesetzt. Bei der Herstellung von Schwefelsäure wird zunächst SO₃ produziert und dann in verdünnter Schwefelsäure absorbiert. Anschließend wird die bei der Absorption gebildete Schwefelsäure mit Wasser auf die gewünschte Konzentration verdünnt.

Beim Einsatz einer Anlage für die Schwefelsäuresynthese gemäß dem Doppelkontaktverfahren passiert SO₃-haltiges Gas einen Zwischenabsorptionturm. In diesem Apparat wird das SO₃-Gas in Schwefelsäure absorbiert. Die Prozessgasaustrittstemperatur nach diesem Absorptionsturm kann zwischen 50°C bis 120°C betragen, bevorzugt 80°C. Die Gastemperatur muss wieder auf die Zündtemperatur des Katalysators in dem nachfolgenden Kontakt erhöht werden. Diese Temperatur kann aufgrund unterschiedlicher Katalysatoren unterschiedlich hoch sein. Dabei wird Wärme von dem Zulaufgas zum Zwischenabsorptionsturm, die unter Einsatz eines Rohrbündelwärmeübertragers zurückgewonnen wird, in das Prozessgas aus dem Zwischenabsorptionsturm zugeführt. Dabei kommen mitgerissene Schwefelsäurepartikeln mit den Rohren in Kontakt, welche von dem eingesetzten Heizmedium durchströmt werden.

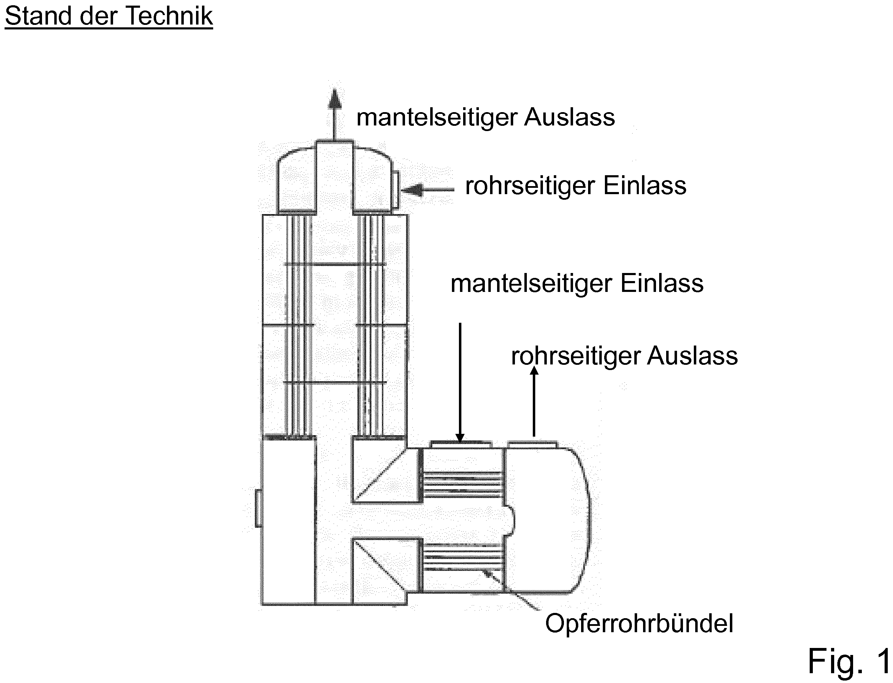

Problematisch dabei ist, dass die Rohre bei hohen Temperaturen einem höchst agressiven Medium ausgesetzt sind. Üblich ist daher, die Wiederaufheizung zweistufig durchzuführen und dabei einen ersten, kleineren Wärmeübertrager mit einem sogenannten Opferrohrbündel einzusetzen, um das Prozessgas zu überhitzen, und einen zweiten, größeren Wärmeübertrager für die endgültige Temperatureinstellung. Ein derartiges System gemäß Douglas Louie (aus: Handbook of sulphuric acid manufacturing; by Douglas K. Louie; Second Edition, ISBN: 978-0-9738992-0-7; Seite 3-55) ist in Figur 1 dargestellt.

Ein Nachteil eines solchen Rohrbündelwärmetauschers ist, dass bei Einleiten aggressiver beziehungsweise korrosiver Medien diese nach ihrem Eintritt durch den mantelseitigen Einlass direkt auf die Rohre auftreffen und diese derart schädigen, dass das Rohrbündel in regelmäßigen Intervallen gegen ein neues ausgetauscht werden muss. Damit ist ein hoher Material- und Kostenaufwand verbunden, zudem wird die Produktion durch die entsprechenden Wechselzeiten für den Austausch unterbrochen.

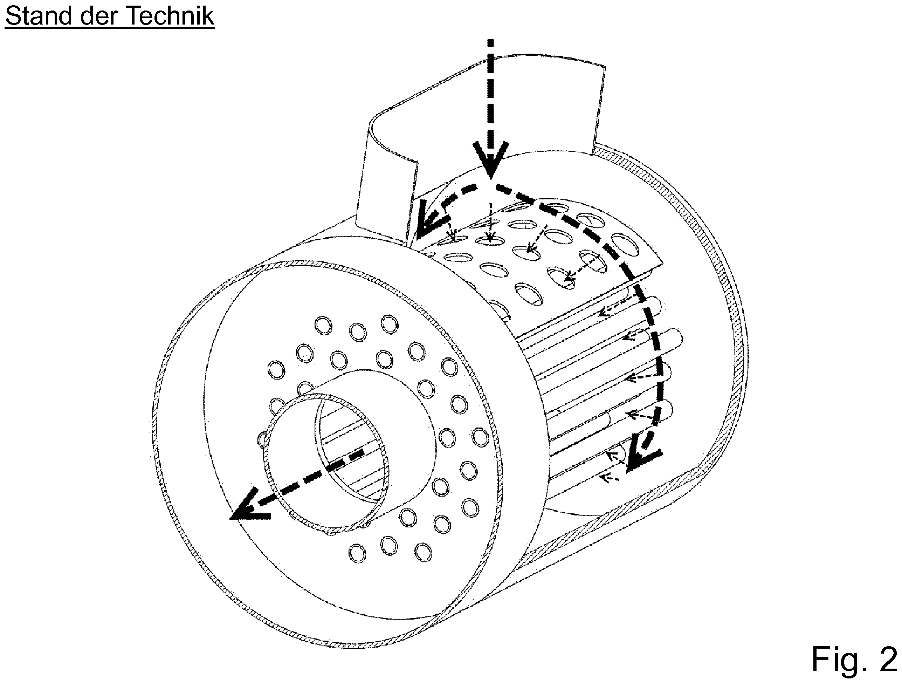

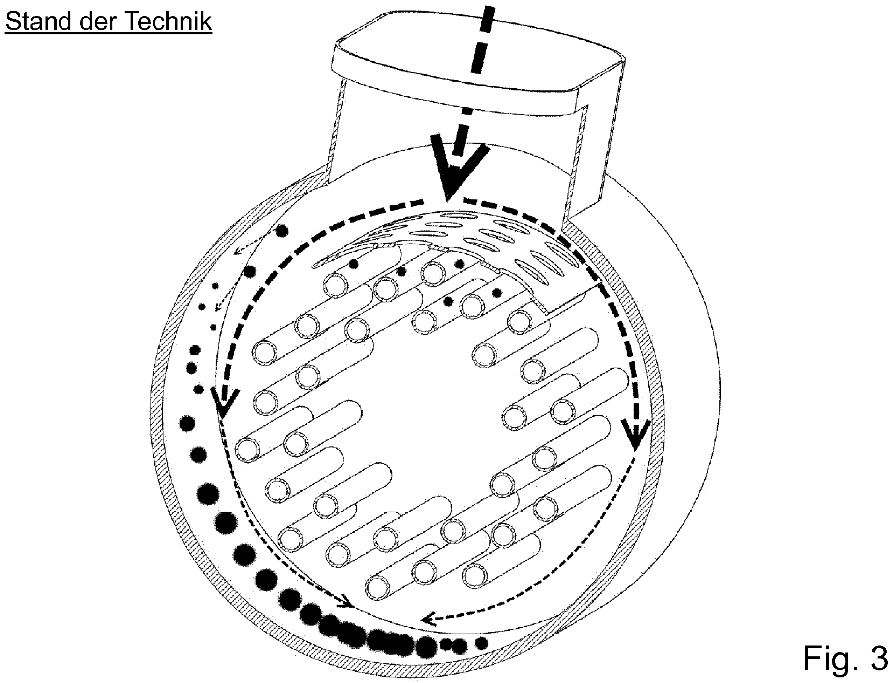

In den Figuren 2 und 3 ist eine weitere bekannte Anordnung dargestellt, bei welcher das Rohrbündel eines Rohrbündelwärmeübertragers im Bereich des Gaseintritts mit einem perforierten Blech bedeckt ist. Damit kann der Kontakt der Rohre mit eintretendem korrosiven Medium zwar etwas vermindert werden, jedoch nicht für einen längeren Betrieb ein Schutz der Rohre vor Korrosion sichergestellt sein. Ein weiteres Problem stellt sich zudem durch die Ansammlung auskondensierter korrosiver Flüssigkeit im unteren Bereich des Mantels.

Aufgabe der Erfindung ist, einen verbesserten Rohrbündelwärmeübertrager zur Verfügung zu stellen.

Insbesondere ist es eine Aufgabe der Erfindung, Korrosion der Rohre beispielsweise bei Einsatz des Wärmeübertragers in einer Anwendung, bei welcher Prozessgas mit korrosiven Aerosolen aus Kondensattropfen beziehungsweise Fluidpartikeln in den Mantel eintritt, insbesondere in der Schwefelsäureherstellung zu vermindern.

Diese Aufgaben werden auf überraschend einfache Weise gelöst mit einem Rohrbündelwärmeübertrager gemäß

Anspruch 1. Vorteilhafte Weiterbildungen sind Gegenstand der Unteransprüche.

Die Erfindung stellt einen Rohrbündelwärmeübertrager zur Verfügung, in welchem in einem Mantelraum ein Rohrbündel aus mehreren Rohren angeordnet ist, welcher nach außen von einer Mantelfläche begrenzt ist und eine zentral im Mantelraum verlaufende Längsachse hat sowie eine Einlassöffnung aufweist, welche im Wesentlichen parallel zur Längsachse angeordnet ist und durch welche im Betrieb Fluid im Wesentlichen senkrecht zur Längsachse in den Mantelraum eintritt, wobei die Anordnung der Rohre im Rohrbündel einen Rohrspiegel definiert, welcher einen von Rohren freien äußeren Kanal zwischen dem äußeren Rand des Rohrbündels und der Mantelfläche aufweist, wobei gemäß der Erfindung ein Schutzblech zwischen dem Rohrbündel und der Mantelfläche angeordnet ist, welches das Rohrbündel parallel zur Längsachse zumindest in dem Bereich abdeckt, welcher der Einlassöffnung gegenüber liegt, wobei der Rohrspiegel zumindest einen Leerraum aufweist, welcher das Rohrbündel in einer Richtung im Wesentlichen senkrecht zur Längsachse teilt, wobei ein Leerraum zwischen dem Schutzblech und der Längsachse positioniert ist.. Damit ermöglicht die Erfindung, durch die Einlassöffnung eintretendes Flüssigpartikeln vom Rohrbündel fernzuhalten. Insbesondere kann im Rahmen der Erfindung vorteilhafterweise das eintretende Flüssigpartikeln um das Rohrbündel herum geleitet werden. Dadurch schafft die Erfindung die Möglichkeit, das Rohrbündel beispielsweise bei der Schwefelsäuresynthese nicht derart der Korrosion auszusetzen, dass es regelmäßig verschleißt und gegen ein neues ersetzt werden muss. Damit werden Material- und Kosteneinsparungen ermöglicht.

Der Mantel beziehungsweise das Schutzblech des Wärmeübertragers liegen im Kühlmedium und dadurch in einem niedrigeren Temperaturbereich. Dadurch sind sie im Wesentlichen keiner Korrosion ausgesetzt.

Das Schutzblech ist insbesondere korrespondierend zur äußeren Form des Rohrbündels geformt. Bei einem Rohrbündel mit Kreisquerschnitt erstreckt sich das Schutzblech vorzugsweise in einer Richtung radial zur Längsachse gesehen entlang eines Kreisbogens mit einem Radius, welcher größer oder gleich dem größten Abstand des äußersten Rohres des Rohrspiegels von der Längsachse ist. Dann kann das Schutzblech einerseits unmittelbar in Kontakt mit dem Rohrbündel positioniert werden.

In bevorzugter Weise wird das Schutzblech im Rahmen der Erfindung von den Rohren entkoppelt montiert. So kann einfacher sichergestellt werden, dass das Blech eine niedrige Temperatur hat und dadurch nicht korrodiert. In weiteren entsprechenden Ausführungsform weist das Schutzblech zumindest einen, vorzugsweise zwei Abstandshalter auf, über welche das Schutzblech in dem Rohrbündelwärmeübertrager relativ zum Rohrbündel und definiert in Relation zu dessen Längsachse positioniert werden kann. Beispielsweise können die Abstandshalter als sich radial zur Längsachse erstreckende Streifen ausgebildet sein, welche insbesondere im Bereich der parallel zur Längsachse verlaufenden äußeren Begrenzungen des Schutzbleches an diesem angebracht oder einstückig mit diesem geformt sind, beispielsweise durch entsprechendes Biegen eines ausreichend groß dimensionierten Bleches. Die Abstandshalter können beispielsweise mit zumindest einem Rohrboden verbunden werden.

Gemäß der Erfindung ist vorgesehen, dass der Rohrspiegel zumindest einen Leerraum aufweist, welcher das Rohrbündel in einer Richtung im Wesentlichen senkrecht zur Längsachse teilt, wobei ein Leerraum insbesondere zwischen dem Schutzblech und der Längsachse positioniert ist. Der Leerraum ist durch das Fehlen von Rohren gekennzeichnet, welche gemäß der in Bereichen außerhalb des Leerraums herrschenden Verteilung der Rohre im Rohrspiegel ansonsten in diesem Raum vorhanden wären. Da mit Hilfe des Schutzbleches im Betrieb das mantelseitig um die Rohre herum strömende Fluid nach seinem Eintritt durch die Eintrittsöffnung in den Rohrbündelwärmeübertrager zunächst in den äußeren Kanal und um das Rohrbündel herum geleitet wird, würden in diesem Bereich angeordnete Rohre kaum zur Wärmeübertragung beitragen, da sie im Wesentlichen nicht von dem mantelseitig strömenden Fluid kontaktiert werden. Daher hat es sich als machbar herausgestellt, auf diese Rohre zu verzichten. Somit kann eine weitere Material- und damit Kostenersparnis mit Hilfe der Erfindung realisiert werden.

Um das mantelseitig strömende Fluid in einfacher Weise aus dem Rohrbündelwärmeübertrager abführen zu können, ist in einer Weiterbildung vorgesehen, dass der Rohrbündelwärmeübertrager einen von Rohren freien inneren Kanal um die Längsachse aufweist. Aus dem inneren Kanal kann das mantelseitig strömende Fluid nach dem Umströmen der Rohre gesammelt abgeführt werden.

Eine hohe Materialersparnis lässt sich realisieren, wenn sich der Leerraum zwischen dem äußerem und dem innerem Kanal erstreckt.

Gemäß einer vorteilhaften Weiterbildung der Erfindung weist der Rohrbündelwärmeübertrager eine einzige Kammer auf. Dieser kann beispielsweise als ein Modul für einen mehrteiligen Rohrbündelwärmeübertrager ausgebildet sein, indem der Auslass für das mantelseitig strömende Fluid zum Anschluss an den Einlass des folgenden, vorzugsweise baugleichen, Rohrbündelwärmeübertragers ausgebildet ist. Dadurch wird ein Verbinden mehrerer Rohrbündelwärmeübertrager in Serienschaltung ermöglicht und damit ein flexibles Anpassen an sich verändernde Anforderungen an die zu übertragende Wärme.

Um längere Strömungswege bei möglichst hohem treibenden Gefälle für die Wärmeübertragung realisieren zu können, weist der Rohrbündelwärmeübertrager in einer Weiterbildung der Erfindung zwei oder mehr, vorzugsweise bis zu zwanzig, Kammern um ein einziges Rohrbündel auf, wobei zwischen einander benachbarten Kammern zumindest ein Umlenksegment für das Mantelraumfluid angeordnet ist. Im Betrieb eines solchen Rohrbündelwärmeübertragers tritt das Mantelraumfluid in die erste Kammer mit Schutzblech ein, wobei zwischen dieser und der benachbarten Kammer ein Umlenksegment positioniert ist. Das Umlenksegment besteht aus einer Scheibe mit einer Fläche senkrecht zur Längsachse, welche invers zum Rohrspiegel korrespondiert, wobei von dieser Fläche ein innerer Bereich ausgeschnitten oder ein äußerer Bereich abgeschnitten ist. Insbesondere korrespondiert der innere Bereich in seinem Querschnitt praktisch mit demjenigen des inneren Kanals, und der äußere Bereich in seinem Querschnitt praktisch mit demjenigen des äußeren Kanals.

Das Rohrbündel kann im Rahmen der Erfindung konzentrisch zur Längsachse angeordnet sein. In einer Weiterbildung der Erfindung ist das Rohrbündel exzentrisch zur Längsachse angeordnet, wodurch über die Positionierung des Rohrbündels eine zusätzliche Möglichkeit geschaffen wird, die Strömung im Mantelraum zu beeinflussen.

Die Endmontage des gesamten Wärmetauschers kann beispielsweise erst am Einsatzort durch Einbau in den Mantel und Anbringen der Zu- und Abführungen an die Anschlüsse für die Verbindungszone erfolgen.

Innerhalb des Rohrspiegels können die Rohre im Rohrbündel zumindest bereichsweise relativ zueinander fluchtend und/oder zumindest bereichsweise versetzt zueinander und/oder zumindest bereichsweise in Bezug auf die Längsachse radial angeordnet sein. Eine weitere Möglichkeit zur Anordnung der Rohre relativ zueinander im Rahmen der Erfindung ist eine spezielle Variante der versetzten Anordnung, nämlich das Anordnen von - von der Längsachse aus gesehen - hintereinander positionierten Rohrreihen derart, dass die Rohre auf einer gekrümmten Bahn angeordnet sind. Diese Anordnung wird erreicht, wenn ein Mauerverbund mit Rohren aufgebaut wird, deren Mittelpunkte auf konzentrischen Kreisen um die Längsachse positioniert sind.

Das Rohrbündel weist in einer bevorzugten entsprechenden Ausführungsform zumindest einen Bereich auf, in welchem Rohre mit ihren Mittelpunkten auf zumindest drei zur Längsachse konzentrischen Kreisen derart angeordnet sind, dass die Verbindungslinie der Mittelpunkte eines Rohres eines Kreises zu einem Rohr des Kreises mit dem nächstgrößeren Durchmesser bei Weiterführung zu einem benachbarten Rohr eines nächsten Kreises mit größerem Durchmesser eine gekrümmte Bahn ergibt. Damit schafft die Erfindung die Möglichkeit, die Rohre auf einander benachbarten Kreisen besonders eng zu packen, denn der Abstand der Kreise, auf denen die Mittelpunkte der Rohre angeordnet sind, kann bei passend dimensioniertem Rohrabstand auch geringer gewählt werden als der Rohrradius.

In einer weiteren Ausführungsform der Erfindung ist vorgesehen, dass das Rohrbündel radial von der Längsachse aus gesehen zumindest zwei Rohrbündelkomponenten umfasst, welche sich in der Anzahl der Rohre pro Fläche und/oder im Außendurchmesser der Rohre und/oder im Abstand der Rohre zueinander und/oder in der Anordnung der Rohre relativ zueinander unterscheiden. So kann die Wärmeaustauscherfläche des Rohrbündelwärmeübertragers bei konstanten Abmessungen des Mantels flexibel an unterschiedliche Anforderungen angepasst werden.

Der erfindungsgemäße Rohrbündelwärmeübertrager kann grundsätzlich für gasförmige Medien verwendet werden sowie für Fluide, die flüssige Komponenten enthalten wie etwa Aerosole oder Nassdampf. Durch die mit der Erfindung erreichbare relativ hohe Wärmeaustauschfläche ist der Rohrbündelwärmeübertrager besonders vorteilhaft zu verwenden als Gas-Gas-Wärmeübertrager, also zum Wärmeaustausch zwischen zwei im Wesentlichen gasförmigen Fluiden. Beispielsweise kann der erfindungsgemäße Rohrbündelwärmeübertrager zur Wärmerückgewinnung aus heißen Abgasströmen eingesetzt werden. Ein besonderes Anwendungsgebiet ergibt sich mit dem Einsatz im Rahmen von Verfahren zur Synthese von Schwefelsäure (H₂SO₄).

Die Erfindung wird nachfolgend unter Bezugnahme auf die beigefügten Zeichnungen anhand von Ausführungsbeispielen näher erläutert. Gleiche und ähnliche Bauteile sind dabei mit gleichen Bezugszeichen versehen, wobei die Merkmale der verschiedenen Ausführungsbeispiele miteinander kombiniert werden können. Es zeigen:
- Figur 1: eine schematische Darstellung eines Längsschnitts durch eine Anordnung mit einem Rohrbündelwärmetauscher nach dem Stand der Technik,
- Figur 2: eine schematische Darstellung eines Längsschnitts durch eine Anordnung mit einem Rohrbündelwärmetauscher nach dem Stand der Technik,
- Figur 3: eine schematische Darstellung eines Längsschnitts durch eine Anordnung mit einem Rohrbündelwärmetauscher nach dem Stand der Technik,
- Figur 4: eine schematische offene perspektivische Darstellung eines erfindungsgemäßen Rohrbündelwärmetauschers mit einer Kammer,
- Figur 5: eine schematische Darstellung eines Längsschnitts durch einen Rohrbündelwärmetauscher gemäß der Erfindung,
- Figur 6: eine schematische Darstellung eines Längsschnitts durch eine Anordnung mit einem erfindungsgemäßen Rohrbündelwärmetauscher, und
- Figur 7: eine schematische Darstellung eines Längsschnitts durch einen Rohrbündelwärmetauscher gemäß einer weiteren Ausführungsform der Erfindung.

In den Figuren ist zur Veranschaulichung teilweise die Strömungsrichtung des Mantelraumfluids und des Rohrraumfluids durch Pfeile angedeutet, wie sie im Betrieb des erfindungsgemäßen Rohrbündelwärmeübertragers prinzipiell erfolgt.

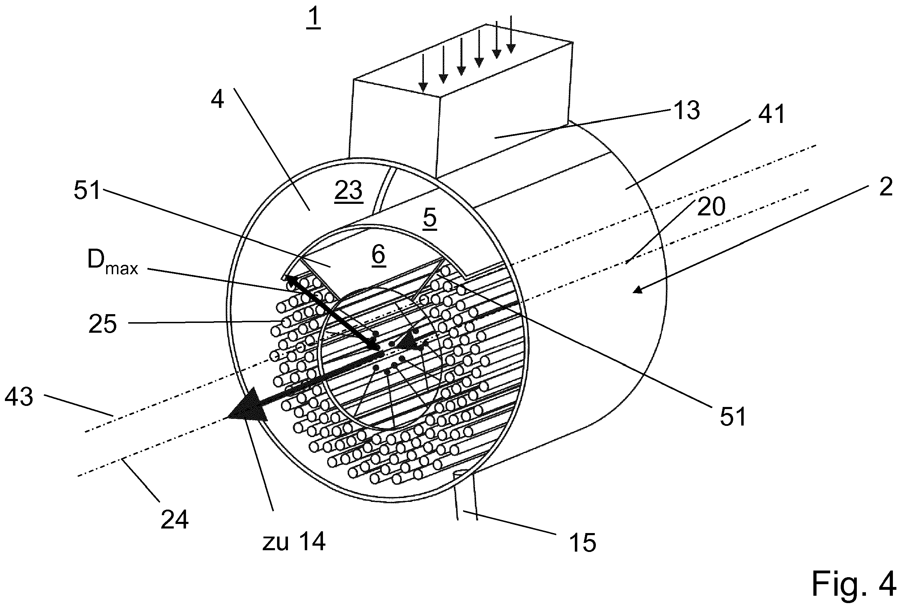

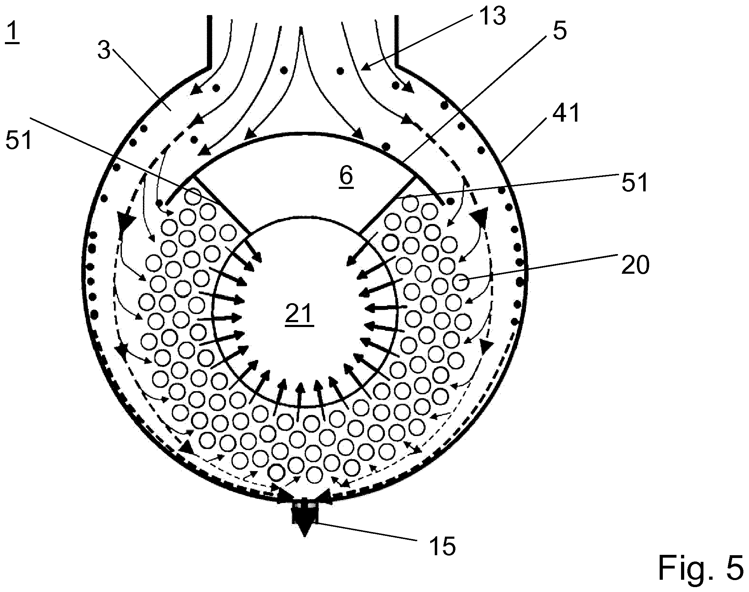

Der Rohrbündelwärmeübertrager 1 ist nach außen von einer Mantelfläche 41 begrenzt. In seinem Mantelraum 4 ist ein Rohrbündel 2 aus mehreren Rohren 20 angeordnet. Der Übersichtlichkeit halber ist nur eines dieser Rohre mit einem Bezugszeichen versehen. Der Rohrbündelwärmeübertrager 1 hat eine zentral im Mantelraum 4 verlaufende Längsachse 43 sowie eine Einlassöffnung 13, welche im Wesentlichen parallel zur Längsachse angeordnet ist und durch welche im Betrieb Fluid im Wesentlichen senkrecht zur Längsachse 43 in den Mantelraum 4 eintritt. Dies ist in Figur 4 und 5 durch entsprechende Pfeile veranschaulicht.

Die Anordnung der Rohre 20 im Rohrbündel 2 definiert einen Rohrspiegel, welcher einen von Rohren 20 freien äußeren Kanal 23 zwischen dem äußeren Rand des Rohrbündels 2 und der Mantelfläche 41 aufweist.

Anders als der Wärmeübertrager gemäß der in den Figuren 1, 2 und 3 dargestellten Verwendungen nach dem Stand der Technik weist der erfindungsgemäße Wärmeübertrager 1 ein Schutzblech 5 auf, welches bereichsweise um das Rohrbündel 2 herum angeordnet ist. In der in Figur 4 dargestellten Ausführungsform schirmt das Schutzblech 5 das Rohrbündel 2 in dem der Einlassöffnung 13 gegenüberliegenden Bereich gegen den direkten Kontakt mit dem durch die Öffnung 13 eintretenden Fluid ab. Das Schutzblech 5 weist in der dargestellten Ausführungsform seitlich zwei Abstandshalter 51 auf. Diese Abstandshalter 51 haben eine Länge gemessen radial zur Längsachse des Rohrbündels 24, welche zumindest um so viel größer ist als der größte Abstand Dₘₐₓ des äußersten Rohres 20 des Rohrbündels 2, dass das Schutzblech 5 um das Rohrbündel 2 herum befestigt werden kann.

Gemäß der Erfindung weist der Rohrspiegel zudem einen Leerraum 6 auf, welcher das Rohrbündel 2 in einer Richtung im Wesentlichen senkrecht zur Längsachse 43 teilt. Dieser Leerraum 6 ist zwischen dem Schutzblech 5 und der Längsachse 43 positioniert.

Der Rohrspiegel kann gemäß der Erfindung im einfachsten Fall eine radiale Form haben, das heißt, wie in den gezeigten Beispielen kreisförmig sein. Insbesondere sind dabei die Rohre 20 nicht über den gesamten Umfang des Kreises angeordnet, sondern es verbleibt ein freistehender Spalt 6. Dieser Spalt 6 stellt einen Leerraum dar, welcher durch das Fehlen von Rohren 20 gekennzeichnet ist, welche gemäß der in Bereichen 25 außerhalb des Leerraums 6 herrschenden Verteilung der Rohre 20 im Rohrspiegel ansonsten in diesem Raum vorhanden wären.

In der gezeigten Ausführungsform ist das Rohrbündel 2 mit seiner Längsachse 24 versetzt zur Längsachse 43 des Mantelraums 4 angeordnet, so dass es exzentrisch in Bezug auf die Längsachse 43 des Rohrbündelwärmeübertragers 1 positioniert ist. Sofern das Rohrbündel 2 konzentrisch im Mantelraum 4 positioniert ist, fällt seine Längsachse 24 mit der Längsachse 43 des Mantelraums zusammen. Der Fachmann versteht die Beschreibung der auf die Längsachse bezogenen Merkmale auch dann, wenn keine weiteren Erläuterungen gegeben sind, aus dem jeweiligen Zusammenhang anhand seines grundlegenden Fachwissens in sinnvoller und zutreffender Weise.

Tritt ein gasförmiges Fluid mantelseitig in den Rohrbündelwärmeübertrager 1 durch die Einlassöffnung 13 ein, welches mit einer Flüssigkeit beladen ist, kann durch die Abkühlung im Betrieb diese Flüssigkeit auskondensieren.

Die sich bildenden Tropfen werden an die Innenwand der Mantelfläche 41 gefördert und fließen daran ab. Wie die schematische Darstellung eines Längsschnitts durch einen Rohrbündelwärmetauscher 1 gemäß der Erfindung in Figur 5 zeigt, sammelt sich im Betrieb im Bodenbereich die Flüssigkeit und kann über einen entsprechenden Auslass 15 abgeführt werden.

Mit dem in den Mantelraum einströmenden Fluid eingebrachte Flüssigkeitstropfen, beispielsweise Säuretropfen, werden in der Strömung von der Längsachse her gesehen nach außen und somit an die Innenwand der Mantelfläche 41 geleitet. Da das durch die Einlassöffnung 13 in den erfindungsgemäßen Rohrbündelwärmeübertrager 1 einströmende Fluid infolge der runden Form des Mantels und des Schutzbleches 5 näherungsweise entlang einer Kreisbahn geführt wird, entsteht ein Zykloneffekt. Dadurch werden diese Flüssigkeitstropfen aus dem Gasstrom abgetrennt und fließen in einem Film entlang dieser Innenwand ab. Im Bodenbereich sammelt sich die Flüssigkeit und kann über den entsprechenden Auslass beziehungsweise Bodenabfluss 15 abgeführt werden. Der Gasstrom durch die Rohre 20 des Rohrbündels 2 ist bei einer Anwendung im Rahmen der Schwefelsäuresynthese frei von Tropfen und führt im Grenzfall gesättigtes Gas.

So wird korrosive Flüssigkeit aus dem Gasstrom abgeschieden. Bei richtiger Auswahl des Mantelwerkstoffs kann die Korrosion in der Mantelwand unterbunden werden. Die Mantelwand liegt in der kalten Seite des Wärmetauschers und dadurch gibt es viele Werkstoffe, die in diesem Temperaturbereich korrosionsresistent sind. Die heißen Rohrwände bleiben dadurch trocken, so dass sie auch keiner Korrosion ausgesetzt sind. In diese Art und Weise ist es gelungen, die Verschleißwärmetauscher in einen Langzeitwärmetauscher umzuwandeln, was sowohl neue Apparatebeschaffungskosten eliminiert als auch den Produktionsausfall für den Umtausch des Verschleißwärmetauschers unterbindet. Die austretenden Gase aus dem Mantel dieser Wärmeaustauscher sind in überhitztem Zustand, so besteht für die nachgeschalteten Apparate keine Korrosionsgefahr, was wiederum eine kosteneffektivere Materialauswahl bei den nachgeschalteten Apparaten ermöglicht.

Der Rohrbündelwärmeübertrager 1 wird in einer bevorzugten Anwendung gemäß der Erfindung derart positioniert, dass die Längsachse 43 im Wesentlichen senkrecht zur Richtung der Schwerkraft verläuft, der Wärmeübertrager 1 also sozusagen mit einem waagrecht verlaufenden Rohrbündel betrieben wird.

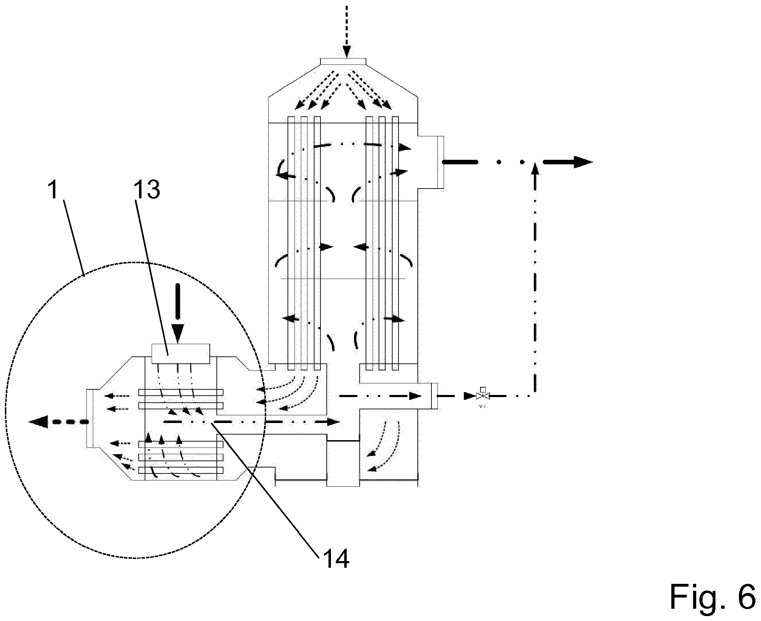

Eine derartige Anwendung ist in Figur 6 gezeigt. Dabei wird der Wärmeübertrager in Kombination mit einem zweiten Rohrbündelwärmeübertrager betrieben, welcher senkrecht zu dem Rohrbündelwärmeübertrager 1 gemäß der Erfindung angeordnet ist. Die senkrechte Anordnung der Wärmetauscher ist nicht zwingend erforderlich, sondern sie können beispielsweise auch aufeinander positioniert werden. In einer weiteren Ausführungsform können sie als zwei separate Wärmetauscher neben einander liegen. In einer weiteren Ausführung kann der in der obigen Darstellung waagrechte Wärmetauscher dagegen senkrecht positioniert werden und das Kondensat bzw. ausgeschiedene Flüssigkeiten durch einen ringförmigen Kanal bzw. eine Wanne, die auf dem unteren Rohrboden angebracht ist, ausgetragen werden.

Die sozusagen liegende Anwendung des erfindungsgemäßen Rohrbündelwärmeübertragers 1 erlaubt einen leichten Zugang und Erhalt in unvorhergesehenen Situationen sowie eine einfachen Austausch, welcher schnell und damit kostengünstig zu bewerkstelligen ist.

Die Wärmeübertragungsfläche des erfindungsgemäßen Wärmeübertragers 1 gemäß der in Figur 6 dargestellten Anwendung ist relativ klein und dient dazu, eine Temperaturdifferenz im Bereich zwischen 10 K und 50 K, bevorzugt 15 K bis 25 K zu erreichen. Daher ist auch die Anzahl der Rohre relativ gering, was eine Kostenersparnis mit sich bringt. Der Durchmesser dieser wenigen Rohre wird dabei relativ groß gewählt. Die Bezugsgröße für die jeweils relativ angegebenen Parameter ist die entsprechende Abmessung in dem vertikal stehenden Wärmeübertrager gemäß der Anordnung, die in Figur 4 dargestellt ist. Die Anlage wird für die Schwefelsäuresynthese derart ausgelegt, dass der Taupunkt der Schwefelsäure am Gasauslass sicher nicht erreicht wird.

Als Material für den erfindungsgemäßen Rohrbündelwärmeübertrager wird ein für die jeweiligen Anforderungen im Betrieb ausgelegter korrosionsbeständiger rostfreier Stahl gewählt.

Die Erfindung bietet somit eine optimierte Fluidführung, insbesondere einen optimierten Gasfluss in tangentialer und in radialer Richtung in Bezug auf das Rohrbündel des Wärmeübertragers. Beim Einsatz im Rahmen der Schwefelsäuresynthese kann damit die Ansammlung kondensierender Säure an den Verbindungsstellen der Rohre verhindert werden, da diese vertikal ausgerichtet sind.

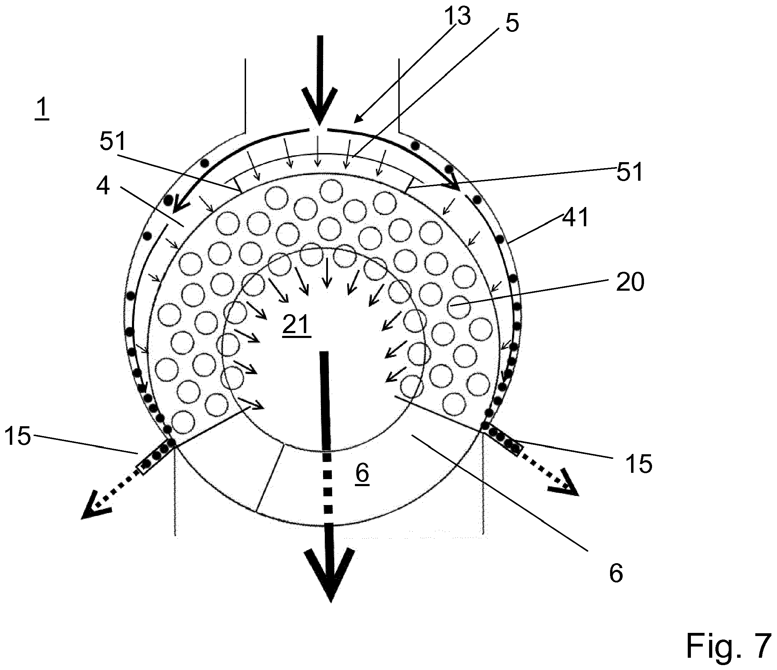

Bei der in Figur 7 dargestellten Ausführungsform ist ein Rohrbündel mit einem Leerraum 6 im Mantel derart angeordnet, dass der Leerraum 6 in dem Bereich des Gasaustritts positioniert ist. Das Schutzblech 5 ist im Bereich des Gaseintritts in Strömungsrichtung vor den Rohren 20 des Rohrbündels 2 positioniert. Es kann mit Öffnungen versehen sein, durch welche eintretendes Gas zwischen die Rohre 20 des Rohrbündels geleitet wird. Der Gasaustritt erfolgt in dem Bereich des Leerraums 6, also im nicht-berohrten Teil des Rohrbündelwärmeübertragers. Dazu weist dieser in der in Figur 7 dargestellten ausführungsform zwei Auslässe 15 auf.

Es ist dem Fachmann ersichtlich, dass die Erfindung nicht auf die vorstehend beschriebenen Beispiele beschränkt ist. Der Schutzumfang wird von den Ansprüche definiert.

### Bezugszeichenliste

- 1: Rohrbündelwärmeübertrager
- 13: Einlassöffnung, Zuführung für Mantelraumfluid, Zuführungseinrichtung
- 14: Auslassöffnung, Abführung für Mantelraumfluid, Abführungseinrichtung
- 15: Auslass, Bodenabfluss
- 2: Rohrbündel
- 20: Rohr
- 21: innerer Kanal
- 23: äußerer Kanal
- 25: Bereich des Rohrspiegels außerhalb des Leerraums
- 3: Rohrboden
- 4: Mantelraum
- 41: Mantelfläche
- 43: Längsachse des Mantelraums
- 5: Schutzblech
- 51: Abstandshalter
- 6: Leerraum, Spalt
- Dₘₐₓ: größter Abstand des äußersten Rohres des Rohrspiegels von der Längsachse

## Patentansprüche

1. Rohrbündelwärmeübertrager(1), in welchem in einem Mantelraum (4) ein Rohrbündel (2) aus mehreren Rohren (20) angeordnet ist,
welcher nach außen von einer Mantelfläche (41) begrenzt ist und
eine zentral im Mantelraum (4) verlaufende Längsachse (43) hat sowie
eine Einlassöffnung (13) aufweist, welche im Wesentlichen parallel zur Längsachse (43) angeordnet ist und durch welche im Betrieb Fluid im Wesentlichen senkrecht zur Längsachse in den Mantelraum eintritt,
wobei die Anordnung der Rohre (20) im Rohrbündel (2) einen Rohrspiegel definiert, welcher einen von Rohren freien äußeren Kanal (23) zwischen dem äußeren Rand des Rohrbündels (2) und der Mantelfläche (41) aufweist,
**dadurch gekennzeichnet, dass**
ein Schutzblech (5) zwischen dem Rohrbündel (2) und der Mantelfläche (41) angeordnet ist, welches das Rohrbündel (2) parallel zur Längsachse (43) zumindest in dem Bereich abdeckt, welcher der Einlassöffnung (13) gegenüberliegt,
wobei
der Rohrspiegel zumindest einen Leerraum (6) aufweist, welcher das Rohrbündel (2) in einer Richtung im Wesentlichen senkrecht zur Längsachse (43) teilt, wobei ein Leerraum (6) zwischen dem Schutzblech (5) und der Längsachse (43) positioniert ist.

2. Rohrbündelwärmeübertrager (1) nach Anspruch 1, **dadurch gekennzeichnet, dass**
der Rohrbündelwärmeübertrager (1) einen von Rohren (20) freien inneren Kanal (21) um die Längsachse aufweist

3. Rohrbündelwärmeübertrager (1) gemäß einem der vorangegangenen Ansprüche,
**dadurch gekennzeichnet, dass**
sich der Leerraum (6) zwischen äußerem Kanal (23) und innerem Kanal (21) erstreckt.

4. Rohrbündelwärmeübertrager (1) gemäß einem der vorangegangenen Ansprüche,
der Rohrbündelwärmeübertrager eine einzige Kammer aufweist.

5. Rohrbündelwärmeübertrager (1) gemäß einem der Ansprüche 1 bis 3,
**dadurch gekennzeichnet, dass**
der Rohrbündelwärmeübertrager zwei oder mehr, vorzugsweise bis zu zwanzig, Kammern um ein einziges Rohrbündel (2) aufweist, wobei zwischen einander benachbarten Kammern ein Umlenksegment für das Mantelraumfluid angeordnet ist,
und wobei in wenigstens einer Kammer ein Schutzblech (5) positioniert ist.

6. Rohrbündelwärmeübertrager (1) gemäß einem der vorangegangenen Ansprüche,
**dadurch gekennzeichnet, dass**
das Rohrbündel (2) konzentrisch oder exzentrisch zur Längsachse (43) angeordnet ist.

7. Rohrbündelwärmeübertrager (1) gemäß einem der vorangegangenen Ansprüche,
**dadurch gekennzeichnet, dass**
die Rohre (20) im Rohrbündel (2) zumindest bereichsweise relativ zueinander fluchtend und/oder zumindest bereichsweise versetzt zueinander und/oder zumindest bereichsweise in Bezug auf die Längsachse radial angeordnet sind.

8. Rohrbündelwärmeübertrager (1) gemäß einem der vorangegangenen Ansprüche,
**dadurch gekennzeichnet, dass**
das Rohrbündel (2) radial von der Längsachse (43) aus gesehen zumindest zwei Rohrbündelkomponenten umfasst, welche sich in der Anzahl der Rohre (20) pro Fläche und/oder im Außendurchmesser der Rohre (20) und/oder im Abstand der Rohre (20) zueinander und/oder in der Anordnung der Rohre (20) relativ zueinander unterscheiden.

9. Verwendung eines Rohrbündelwärmeübertragers (1) nach einem der Ansprüche 1 bis 8 als Gas-Gas-Wärmeübertrager, insbesondere zur Wärmerückgewinnung.

10. Verwendung nach Anspruch 9,
wobei der Gas-Gas-Wärmeübertrager in einem Verfahren zur Synthese von Schwefelsäure verwendet wird.

## Claims

1. A shell and tube heat exchanger (1) in which a tube bundle (2) comprising a plurality of tubes (20) is arranged within a shell (4), which
is outwardly bounded by a shell wall (41) and
has a longitudinal axis (43) running centrally through the shell (4) and
comprises an inlet opening (13) which is provided substantially parallel to the longitudinal axis (43) and through which fluid enters the shell substantially perpendicular to the longitudinal axis during operation;
wherein the arrangement of the tubes (20) in the tube bundle (2) defines a tube array which includes an outer channel (23) devoid of tubes between the periphery of the tube bundle (2) and the shell wall (41) ;
**characterized in that**
a protective plate (5) is arranged between the tube bundle (2) and the shell wall (41) so as to cover the tube bundle (2) parallel to the longitudinal axis (43) at least in the area opposite the inlet opening (13);
wherein the tube array includes at least one empty space (6) which divides the tube bundle (2) in a direction substantially perpendicular to the longitudinal axis (43), wherein an empty space (6) is located in particular between the protective plate (5) and the longitudinal axis (43).

2. The shell and tube heat exchanger (1) according to claim 1,
**characterized in that**
the shell and tube heat exchanger (1) includes an inner channel (21) devoid of tubes (20) around the longitudinal axis.

3. The shell and tube heat exchanger (1) according to any of the preceding claims,
**characterized in that**
the empty space (6) extends between the outer channel (23) and the inner channel (21).

4. The shell and tube heat exchanger (1) according to any of the preceding claims, **characterized in that**
the shell and tube heat exchanger has a single chamber.

5. The shell and tube heat exchanger (1) according to any of claims 1 to 3,
**characterized in that**
the shell and tube heat exchanger has two or more, preferably up to twenty chambers around a single tube bundle (2), with a deflection segment for the shell fluid arranged between adjacent chambers,
and wherein a protective plate (5) is arranged in at least one chamber.

6. The shell and tube heat exchanger (1) according to any of the preceding claims,
**characterized in that**
the tube bundle (2) is arranged concentrically or eccentrically relative to the longitudinal axis (43).

7. The shell and tube heat exchanger (1) according to any of the preceding claims,
**characterized in that**
the tubes (20) in the tube bundle (2) are aligned to one another at least in sections thereof, and/or are offset from one another at least in sections thereof, and/or are oriented radially with respect to the longitudinal axis at least in sections thereof.

8. The shell and tube heat exchanger (1) according to any of the preceding claims,
**characterized in that**
the tube bundle (2) comprises at least two tube bundle fractions as seen radially of the longitudinal axis (43), which differ in the number of tubes (20) per area and/or in the outer diameter of the tubes (20) and/or in the spacing of the tubes (20) to one another and/or in the arrangement of the tubes (20) relative to each other.

9. Use of a shell and tube heat exchanger (1) according to any of claims 1 to 8 as a gas-gas heat exchanger, in particular for heat recovery.

10. Use according to claim 9, wherein the gas-gas heat exchanger is used in a process for sulfuric acid synthesis.

## Revendications

1. Échangeur de chaleur à faisceau tubulaire (1), dans lequel un faisceau tubulaire (2) composé de plusieurs tubes (20) est disposé dans un espace d'enveloppe (4),
qui est limité vers l'extérieur par une surface d'enveloppe (41),
qui a un axe longitudinal (43) passant au centre de l'espace d'enveloppe (4) et
qui présente un orifice d'admission (13) qui est disposé essentiellement parallèlement à l'axe longitudinal (43) et par lequel le fluide entre dans l'espace d'enveloppe essentiellement perpendiculairement à l'axe longitudinal pendant le fonctionnement,
la disposition des tubes (20) dans le faisceau tubulaire (2) définissant un miroir tubulaire qui présente un conduit extérieur (23) dépourvu de tubes, entre le bord extérieur du faisceau tubulaire (2) et la surface d'enveloppe (41), **caractérisé en ce que**
une plaque de protection (5) est disposée entre le faisceau tubulaire (2) et la surface d'enveloppe (41), couvrant le faisceau tubulaire (2) parallèlement à l'axe longitudinal (43) au moins dans la zone qui se trouve à l'opposé de l'orifice d'admission (13),
le miroir tubulaire présentant au moins un espace (6) qui divise le faisceau tubulaire (2) dans une direction essentiellement perpendiculaire à l'axe longitudinal (43), un espace (6) étant positionné entre la plaque de protection (5) et l'axe longitudinal (43).

2. Échangeur de chaleur à faisceau tubulaire (1) selon la revendication 1,
**caractérisé en ce que**
l'échangeur de chaleur à faisceau tubulaire (1) présente un conduit intérieur (21) dépourvu de tubes (20) autour de l'axe longitudinal.

3. Échangeur de chaleur à faisceau tubulaire (1) selon l'une des revendications précédentes,
**caractérisé en ce que**
l'espace (6) s'étend entre le conduit extérieur (23) et le conduit intérieur (21).

4. Échangeur de chaleur à faisceau tubulaire (1) selon l'une des revendications précédentes,
**caractérisé en ce que**
l'échangeur de chaleur à faisceau tubulaire présente un compartiment unique.

5. Échangeur de chaleur à faisceau tubulaire (1) selon l'une des revendications 1 à 3,
**caractérisé en ce que**
l'échangeur de chaleur à faisceau tubulaire présente deux ou plus, préférablement jusqu'à vingt, compartiments autour d'un seul faisceau tubulaire (2), un segment de déviation pour le fluide de l'espace d'enveloppe étant disposé entre des compartiments adjacents,
et une plaque de protection (5) étant positionnée dans au moins un compartiment.

6. Échangeur de chaleur à faisceau tubulaire (1) selon l'une des revendications précédentes,
**caractérisé en ce que**
le faisceau tubulaire (2) est disposé de façon concentrique ou excentrique par rapport à l'axe longitudinal (43).

7. Échangeur de chaleur à faisceau tubulaire (1) selon l'une des revendications précédentes,
**caractérisé en ce que**
les tubes (20) dans le faisceau tubulaire (2) sont disposés radialement, au moins en partie en alignement les uns par rapport aux autres et/ou au moins en partie en décalage les uns par rapport aux autres et/ou au moins en partie par rapport à l'axe longitudinal.

8. Échangeur de chaleur à faisceau tubulaire (1) selon l'une des revendications précédentes,
**caractérisé en ce que**
le faisceau tubulaire (2) comprend, vu radialement depuis l'axe longitudinal (43), au moins deux composants du faisceau tubulaire, qui se différencient dans le nombre des tubes (20) par surface et/ou dans le diamètre extérieur des tubes (20) et/ou dans l'espacement entre les tubes (20) et/ou dans la disposition des tubes (20) les uns par rapport aux autres.

9. Utilisation d'un échangeur de chaleur à faisceau tubulaire (1) selon l'une des revendications 1 à 8, comme échangeur de chaleur gaz-gaz, en particulier pour la récupération de chaleur.

10. Utilisation selon la revendication 9, l'échangeur de chaleur gaz-gaz étant utilisé dans un procédé pour la synthèse d'acide sulfurique.
